# EUROPÄISCHE PATENTSCHRIFT

(11) **EP 3 559 556 B1**
(45) Veröffentlichungstag und Bekanntmachung des Hinweises auf die Patenterteilung: **02.02.2022**
(21) Anmeldenummer: 17835834.7
(22) Anmeldetag: 19.12.2017
(51) Int. Cl.: F23R 3/28, F23D 14/22

(54) **BRENNERSPITZE ZUM EINBAU IN EINEN BRENNER MIT LUFTKANALSYSTEM UND BRENNSTOFFKANALSYSTEM UND VERFAHREN ZU DEREN HERSTELLUNG**
BURNER TIP FOR FITTING IN A BURNER WITH AIR DUCT SYSTEM AND FUEL CHANNEL SYSTEM AND METHOD FOR THE PRODUCTION THEREOF
POINTE DE BRÛLEUR DESTINÉE À ÊTRE MONTÉE DANS UN BRÛLEUR COMPRENANT UN SYSTÈME DE CONDUIT D'AIR ET UN SYSTÈME DE CONDUIT DE COMBUSTIBLE ET PROCÉDÉ DE FABRICATION ASSOCIÉ

(30) Priorität: 22.12.2016 DE 102016226061
(43) Veröffentlichungstag der Anmeldung: 30.10.2019
(73) Patentinhaber: Siemens Energy Global GmbH & Co. KG, 81739 München (DE)
(72) Erfinder: HOCKLEY, Carl, Worcester WR3 7QJ (GB); KIENER, Christoph, 81369 München (DE); KREUTZER, Andreas, 12621 Berlin - Hellersdorf (DE); KÜSTERS, Yves, 10829 Berlin (DE); SALCHER, Matthias, 81379 München (DE)
(86) Internationale Anmeldenummer: PCT/EP2017/083495
(87) Internationale Veröffentlichungsnummer: WO 2018/114918

(56) Entgegenhaltungen:
- EP-A1- 2 703 339
- EP-A1- 2 930 430
- DE-A1-102004 029 029
- DE-A1-102006 029 586

## Beschreibung

Die Erfindung betrifft eine Brennerspitze zum Einbau in einen Brenner, wobei die Brennerspitze ein zur Umgebung der Brennerspitze offenes Luftkanalsystem und ein zur Umgebung der Brennerspitze offenes Brennstoffkanalsystem aufweist. Damit weist die Brennerspitze an ihrer Oberfläche Öffnungen auf, die eine Verbindung des Luftkanalsystems und des Brennstoffkanalsystems mit der Umgebung der Brennerspitze schaffen. Die Umgebung der Brennerspitze wird dabei beispielsweise durch einen Brennraum gebildet, in dem durch das Brennstoffkanalsystem beförderter Brennstoff verbrannt wird. Dieser Brennraum kann beispielsweise in einer Gasturbine angeordnet sein.

Weiterhin betrifft die Erfindung ein Verfahren zum Herstellen einer Brennerspitze mit dem oben beschriebenen Aufbau.

Brennerspitzen der eingangs angegebenen Bauweise sind beispielsweise aus der EP 2 196 733 A1 bekannt. Die dort beschriebene Brennerspitze kann beispielsweise in einer Gasturbine zum Einsatz kommen, wobei die Brennerspitze das stromabwärts gelegene Ende einer Brennerlanze bildet, die in einem Hauptkanal für Verbrennungsluft angeordnet ist. Die Brennerspitze ist doppelwandig aufgebaut, wobei die Außenwand einen Hitzeschild bildet, der entstehende Verbrennungswärme von der Innenwand fernhalten soll. Daher ist zwischen der Außenwand und der Innenwand ein ringförmiger Hohlraum, also ein Ringraum, angeordnet, der zu Kühlungszwecken über Öffnungen mit Luft durchströmt werden kann. Der Hitzeschild muss bei der beschriebenen Ausführung darauf ausgelegt werden, die Wärmebeanspruchung aufgrund der in der nachgeschalteten Brennkammer ablaufenden Verbrennung zu ertragen. Daher stellt die Außenwand der Brennerspitze den limiterenden Faktor für die Lebensdauer der Brennerspitze dar.

Die EP 2 703 339 A1 offenbart einen Brenner mit den Merkmalen des Oberbegriffs des Anspruchs 1, der für die überstöchiometrische Verbrennung einer Kohlenwasserstoffquelle geeignet ist, mit einer Düse zur Bildung einer Diffusionsflamme außerhalb des Brenners, wobei die Düse einen oder mehrere rohrförmige Körper aufweist, die einen Kanal oder eine Vielzahl von koaxialen Kanälen für entsprechende Reaktantenströme definieren, wobei der oder jeder der rohrförmigen Körper, die die Düse bilden, aus einem technischen Keramikmaterial hergestellt sind.

In DE 10 2004 029 029 A1 wird ein Einspritzkopf offenbart, der aus mindestens zwei koaxial zu einer Achse ineinandergreifenden Segmenten aufgebaut ist, wobei die mindestens zwei Segmente mindestens einen Verteilkanal mit einem zugeordneten langgezogenen Auslassbereich für einen Strom eines ersten Mediums und mindestens einen Verteilkanal mit einem zugeordneten langgezogenen Auslassbereich für einen Strom eines zweiten Mediums begrenzende Wandbereiche aufweisen und dass der langgezogene Auslassbereich für das erste Medium und der langgezogene Auslassbereich für das zweite Medium koaxial zueinander und mindestens in einem Winkelbereich von 360° um die Achse umlaufend ausgebildet sind.

Die EP 2 930 430 A1 offenbart eine Brennereinrichtung für eine Gasturbine, die einen Brennerkörper umfasst, wobei der Brennerkörper eine axiale Endfläche aufweist. Der Brennerkörper umfasst ferner einen ersten Versorgungskanal, der eine erste Öffnung in der axialen Stirnfläche aufweist. Die Brennervorrichtung umfasst ferner ein Brennerendelement, das an der axialen Stirnfläche angeordnet ist. Das Brennerendelement umfasst eine erste Plenumskammer, die mit der ersten Öffnung des ersten Zufuhrkanals gekoppelt ist, so dass ein erstes Fluid von dem ersten Zufuhrkanal der ersten Plenumskammer zugeführt werden kann. Das Brennerendelement umfasst ferner eine Gitterstruktur mit einer Vielzahl von miteinander verbundenen Poren, wobei die erste Plenumskammer mit der Gitterstruktur gekoppelt ist, um das erste Fluid in die Gitterstruktur einzuspeisen. Die Gitterstruktur bildet einen Teil einer Brennerfläche, die zu einer Brennkammer der Gasturbine zeigt, so dass eine Fluidverbindung zwischen der Brennkammer und der Gitterstruktur gebildet wird.

Die Aufgabe der Erfindung liegt darin, eine Brennerspitze der eingangs angegebenen Art derart weiterzubilden, dass sich eine Verbesserung der Lebensdauer des Bauteils ergibt. Außerdem ist es Aufgabe der Erfindung, ein Verfahren zur Herstellung einer solchen Brennerspitze anzugeben.

Diese Aufgabe wird mit der eingangs angegebenen Brennerspitze erfindungsgemäß dadurch gelöst, dass ein Luftkanal, der Teil des Luftkanalsystems ist, zentral in der Brennerspitze verläuft und dieser zentrale Luftkanal von einer offen porösen und/oder als Raumgitter ausgeführten Wandstruktur umgeben ist, wobei in der Wandstruktur befindliche Poren (bei einer offen porösen Wandstruktur) und/oder Gitterzwischenräume (bei einer als Raumgitter ausgeführten Wandstruktur) eine Verbindung zwischen dem Luftkanal und der Umgebung der Brennerspitze bilden. Diese Verbindung ist damit Teil des Luftkanalsystems, welches zur Umgebung der Brennerspitze führt. Dies wird bei den Poren dadurch erreicht, dass die Wandstruktur offen porös ist, d. h. dass die Poren Kanäle bilden, die im Luftkanalsystem zum Transport der Luft beitragen. Dies gilt auch für die Gitterzwischenräume, welche derart untereinander verbunden sind, dass ein Weg für die Luft nach außen entsteht, der Teil des Luftkanalsystems ist.

Durch den Aufbau der Wandstruktur ergibt sich der Vorteil einer Oberflächenvergrößerung für einen Wärmeübergang von Wärme aus der Umgebung der Brennerspitze in die im Luftkanalsystem strömende Luft. Diese erzeugt eine Gegenstromkühlung, so dass eingetragene Wärme nach einen Übergang in die Luft durch die Wandstruktur wieder ausgetragen wird.

Ein weiterer vorteilhafter Kühlungseffekt entsteht dadurch, dass die Wandstruktur über die Poren oder Gitterzwischenräume eine Vielzahl von kleinen Öffnungen an der Oberfläche der Brennerspitze zur Verfügung stellt, durch die die Luft in die Umgebung der Brennerspitze ausströmt. Dort entsteht ein Luftmantel, der, obwohl die Luft sich in der Wandstruktur bereits im gewissen Maße erwärmt hat, immer noch kühler ist, als die in dem Brennraum vorliegende Verbrennungstemperatur. Der entstehende Luftmantel bildet dadurch vorteilhaft eine thermische Isolation und verringert den Wärmeeintrag und damit die thermische Belastung der Brennerspitze vorteilhaft zusätzlich.

Erfindungsgemäß besteht die Wandstruktur aus mehreren Lagen mit unterschiedlicher Porosität (im Falle eines offen porösen Aufbaus der Wandstruktur) und/oder unterschiedlichem Gitteraufbau (im Falle eines Aufbaus der Wandstruktur als Raumgitter), wobei diese Lagen von dem Luftkanalsystem nacheinander durchlaufen werden. Insbesondere können drei Lagen mit unterschiedlicher Porosität und/oder unterschiedlichem Gitteraufbau vorgesehen werden. Der lagenweise Aufbau ermöglicht vorteilhaft, dass die Wandstruktur lagenweise mit den gewünschten Eigenschaften ausgestattet werden kann, wobei die Wärmeleiteigenschaften, die mechanische Stabilität und der Strömungswiderstand in den durch die Wandstruktur gebildeten Lagen beeinflusst werden kann. Dabei gilt, dass der Strömungswiderstand umso geringer ausfällt, je größer der zur Verfügung gestellte Gesamtquerschnitt der Poren oder Gitterzwischenräume ist. Auch ist der Strömungswiderstand bei großen Poren oder Gitterzwischenräumen geringer als bei kleinen. Die Wärmeleitung in der Wandstruktur wird hauptsächlich durch den Volumenanteil an Material im Vergleich zum Volumenanteil an Poren bestimmt. Je größer der Volumenanteil an Material, desto größer auch die Wärmeleitung. Die mechanische Stabilität wird in einem offen porös ausgebildeten Material gewöhnlich geringer ausfallen als in einem Raumgitter, welches bei der Wahl seiner Geometrie auf die mechanischen Belastungen hin optimiert werden kann.

Vorteilhaft ist es z. B., wenn die mittlere Porengröße in benachbarten Lagen, gesehen in der vorgesehenen Flussrichtung der Luft, von Lage zu Lage abnimmt. Anders ausgedrückt durchströmt die Luft zunächst eine Lage mit einer größeren mittleren Porengröße mit vergleichsweise geringerem Strömungswiderstand, wo sie bereits Wärme aufnimmt und strömt dann durch die Lage mit einer geringeren mittleren Porengröße, wo sie wegen der geringeren Strömungsgeschwindigkeit und der größeren Oberfläche weitere Wärme aufnehmen kann. Die Vielzahl der Poren geringerer mittlerer Größe bewirkt bei einem Ausströmen in die Umgebung der Brennerspitze außerdem die zuverlässige Ausbildung eines geschlossenen Luftmantels, der einen zusätzlichen thermischen Schutz bietet.

Um einen optimalen Kühlungseffekt und die Ausbildung eines wirksamen Luftmantels zu gewährleisten, kann die Porengröße der Poren in einer an die Umgebung der Brennerspitze grenzenden Lage vorteilhaft zwischen 10 und 250 µm, bevorzugt zwischen 30 und 170 µm, betragen. In einer an den zentralen Luftkanal angrenzenden Lage kann die Porengröße von Poren zwischen 1 und 9 mm, bevorzugt zwischen 2 und 6 mm und noch bevorzugter zwischen 2,5 und 4,5 mm, betragen. Anstelle einer porösen Lage kann auch eine aus einem Raumgitter bestehende Lage verwendet werden, wobei die Gitterzwischenräume ebenfalls Abmessungen zwischen 1 und 9 mm, bevorzugt zwischen 2 und 6 mm und besonders bevorzugt zwischen 2,5 und 4 mm betragen kann. Als Kenngröße für das Gitter kann auch der Lochabstand verwendet werden, wobei dieser als Abstand der jeweiligen Schwerpunkte der Querschnittsflächen der Gitterzwischenräume voneinander ermittelt wird und ebenfalls in den oben angegebenen Wertebereichen liegen kann.

Wenn drei Lagen in der Wandstruktur vorgesehen sind, kann vorteilhaft die Porengröße der Poren in einer mittleren Lage, auch Zwischenlage genannt, die zwischen der an den zentralen Luftkanal angrenzenden Lage und der an die Umgebung der Brennerspitze grenzenden Lage liegt, zwischen 150 und 1000 µm, bevorzugt zwischen 200 und 800 µm und besonders bevorzugt zwischen 250 und 750 µm betragen. Es können auch mehrere Zwischenlagen vorgesehen werden.

Gemäß einer anderen Ausgestaltung der Erfindung ist vorgesehen, dass im zentralen Luftkanal Luftleitstrukturen vorgesehen sind. Diese werden von der Luft angeströmt, wodurch der Luftstrom in geeigneter Weise gerichtet werden kann. Zum Beispiel ist es möglich, dass die Luftleitstrukturen mit Innenkanälen ausgestattet sind, die auf die Wandstruktur gerichtet sind. Auf diese Weise lässt sich der Luftstrom auf der an den Luftkanal angrenzenden Seite vorteilhaft mit einem gleichmäßigen Luftstrom versorgen, so dass dieser alle sich zum Luftkanal hin öffnenden Poren und/oder Gitterzwischenräume mit Luft versorgt.

Vorteilhaft ist es außerdem, wenn durch die Wandstruktur eine Vielzahl von Brennstoffkanälen, die Teil des Brennstoffkanals sind, führt, wobei diese Brennstoffkanäle mit Brennstofföffnungen in Oberfläche der Brennerspitze verbunden sind. Diese Brennstofföffnungen können vorteilhaft gleichmäßig am Umfang der Brennerspitze verteilt sein, so dass der Brennstoff gleichmäßig in die strömende Luft eingeleitet und in dieser verteilt wird. Auch die thermische Belastung der Brennerspitze wird durch die folgende gleichmäßigere Verbrennung des Brennstoffs homogener ausfallen, wodurch asymmetrische thermische Belastungsspitzen vermieden werden.

Weiterhin ist es vorteilhaft, wenn die Brennstoffkanäle mit einem den zentralen Luftkanal umgebenden Ringkanal, der ebenfalls Teil des Brennstoffkanalsystems ist, in Verbindung stehen. Auf diese Weise kann der Brennstoff gleichmäßig allen Brennstoffkanälen zugeführt werden, damit ist auch die an den unterschiedlichen Brennstofföffnungen freigesetzte Menge an Brennstoff homogen. Der Vorteil liegt in einer gleichmäßigen Verbrennung des Brennstoffs und einer gleichmäßigen thermischen Belastung der Brennerspitze.

Die Aufgabe wird mit dem eingangs angegebenen Verfahren überdies erfindungsgemäß dadurch gelöst, dass zum Herstellen ein additives Herstellungsverfahren verwendet wird, bei dem die offen porös und/oder als Raumgitter ausgeführte Wandstruktur mit der Brennerspitze in einem Stück hergestellt wird. Additive Herstellungsverfahren eignen sich vorteilhaft in besonderer Weise zur Herstellung auch feiner Gitterstrukturen, so dass die Porengröße optimal an die konstruktiven Vorgaben angepasst werden kann. Insbesondere lassen sich feine Gitterstrukturen erzeugen, die die oben bereits erwähnten Abmessungen aufweisen. Auch lassen sich in den hergestellten Strukturen unterschiedliche Porositäten erzeugen, so dass die Wandstruktur während des additiven Herstellungsverfahrens auch aus mehreren Lagen aufgebaut werden kann. Dabei wird die Wandstruktur in einem Stück gebildet. Vorteilhaft lässt sich die Wandstruktur auch in einem Stück mit dem Rest der Brennerspitze additiv herstellen.

Die unterschiedliche Porosität in den Lagen kann vorteilhaft durch Veränderung des Energieeintrags in das Pulverbett eines pulverbettbasierten additiven Herstellungsverfahrens erzeugt werden. Eine andere Möglichkeit besteht darin, unterschiedliche Pulver zu verwenden. Diese können bei der Erzeugung des Pulverbetts ortsaufgelöst oder nacheinander dosiert und anschließend aufgeschmolzen werden. Durch Änderung des Energieeintrags kann beispielsweise zwischen einem vollständigen Aufschmelzen der Pulverpartikel (Selektives Laserschmelzen) und einem Sintern (Selektives Lasersintern) der Pulverpartikel durch Anschmelzen ihrer Oberfläche variiert werden, wobei bei einem Sinterverfahren ein offen poröses Kanalsystem zwischen den Partikeln entsteht.

Eine andere Möglichkeit besteht darin, den Energieeintrag durch Vergrößern des Linienabstands der Belichtungslinien zu verringern. Dieser kann so groß gewählt werden, dass im Pulverbett ein Teil der Partikel nicht aufgeschmolzen wird, wodurch in diesen Bereichen Poren in dem Gefüge entstehen. Der Übergang der Herstellung solcher Porenstrukturen zur Herstellung von Gitterstrukturen ist dabei fließend, denn auch Gitterstrukturen werden dadurch erzeugt, dass das Material des Pulverbetts nur im Bereich der zu erzeugenden Gitterverstrebungen aufgeschmolzen wird.

Als additive Fertigungsverfahren im Sinne dieser Anmeldung sollen Verfahren verstanden werden, bei denen das Material, aus dem ein Bauteil hergestellt werden soll, dem Bauteil während der Entstehung hinzugefügt wird. Dabei entsteht das Bauteil bereits in seiner endgültigen Gestalt oder zumindest annähernd in dieser Gestalt. Das Baumaterial ist vorzugsweise pulverförmig, wobei durch das additive Fertigungsverfahren das Material zur Herstellung des Bauteils unter Einbringung von Energie physikalisch verfestigt wird.

Um das Bauteil herstellen zu können, werden das Bauteil beschreibende Daten (CAD-Modell) für das gewählte additive Fertigungsverfahren aufbereitet. Die Daten werden zur Erstellung von Anweisungen für die Fertigungsanlage in an das Fertigungsverfahren angepasste Daten des Bauteils umgewandelt, damit in der Fertigungsanlage die geeigneten Prozessschritte zur sukzessiven Herstellung des Bauteils ablaufen können. Die Daten werden dafür so aufbereitet, dass die geometrischen Daten für die jeweils herzustellenden Lagen (Slices) des Bauteils zur Verfügung stehen, was auch als Slicen bezeichnet wird.

Als Beispiele für das additive Fertigen können das selektive Lasersintern (auch SLS für Selective Laser Sintering), das Selektive Laserschmelzen (auch SLM für Slective Laser Melting), das Elektronenstrahlschmelzen (auch EBM für Electrone Beam Melting), das Laserpulverauftragsschweißen (auch LMD für Laser Metal Deposition) oder das Kaltgasspritzen (auch GDCS für Gas Dynamic Cold Spray) genannt werden. Diese Verfahren eignen sich insbesondere zur Verarbeitung von metallischen Werkstoffen in Form von Pulvern, mit denen Konstruktionsbauteile hergestellt werden können.

Beim SLM, SLS und EBM werden die Bauteile lagenweise in einem Pulverbett hergestellt. Diese Verfahren werden daher auch als pulverbettbasierte additive Fertigungsverfahren bezeichnet. Es wird jeweils eine Lage des Pulvers in dem Pulverbett erzeugt, die durch die Energiequelle (Laser oder Elektronenstrahl) anschließend in denjenigen Bereichen lokal aufgeschmolzen oder gesintert wird, in denen das Bauteil entstehen soll. So wird das Bauteil sukzessive lagenweise erzeugt und kann nach Fertigstellung dem Pulverbett entnommen werden.

Beim LMD und GDCS werden die Pulverteilchen direkt der Oberfläche zugeführt, auf der ein Materialauftrag erfolgen soll. Beim LMD werden die Pulverpartikel durch einen Laser direkt in der Auftreffstelle auf der Oberfläche aufgeschmolzen und bilden dabei eine Lage des zu erzeugenden Bauteils. Beim GDCS werden die Pulverpartikel stark beschleunigt, so dass sie vorrangig aufgrund ihrer kinetischen Energie bei gleichzeitiger Verformung auf der Oberfläche des Bauteils haften bleiben.

GDCS und SLS haben das Merkmal gemeinsam, dass die Pulverteilchen bei diesen Verfahren nicht vollständig aufgeschmolzen werden. Dies ermöglicht unter anderem auch die Herstellung von porösen Strukturem, wenn Zwischenräume zwischen den Partikeln erhalten bleiben. Beim GDCS erfolgt ein Aufschmelzen höchstens im Randbereich der Pulverpartikel, die aufgrund der starken Verformung an ihrer Oberfläche anschmelzen können. Beim SLS wird bei Wahl der Sintertemperatur darauf geachtet, dass diese unterhalb der Schmelztemperatur der Pulverpartikel liegt. Demgegenüber liegt beim SLM, EBM und LMD der Energieeintrag betragsmäßig bewusst so hoch, dass die Pulverpartikel vollständig aufgeschmolzen werden.

Weitere Einzelheiten der Erfindung werden nachfolgend anhand der Zeichnung beschrieben. Gleiche oder sich entsprechende Zeichnungselemente werden nur insoweit mehrfach erläutert, wie sich Unterschiede zwischen den einzelnen Figuren ergeben. Es zeigen:
- Figur 1: den schematischen Aufbau eines Brenners, in dem Ausführungsbeispiel der erfindungsgemäßen Brennerspitze eingebaut ist, im Schnitt,
- Figur 2: ein Ausführungsbeispiel des erfindungsgemäßen Brenners im Schnitt,
- Figur 3: ein Ausführungsbeispiel des erfindungsgemäßen Verfahrens, bei dem ein Brenner gemäß Figur 2 hergestellt wird, als Ausschnitt,
- Figur 4: ein anderes Ausführungsbeispiel der erfindungsgemäßen Brennerspitze im Schnitt und
- Figur 5: das Detail V gemäß Figur 4.

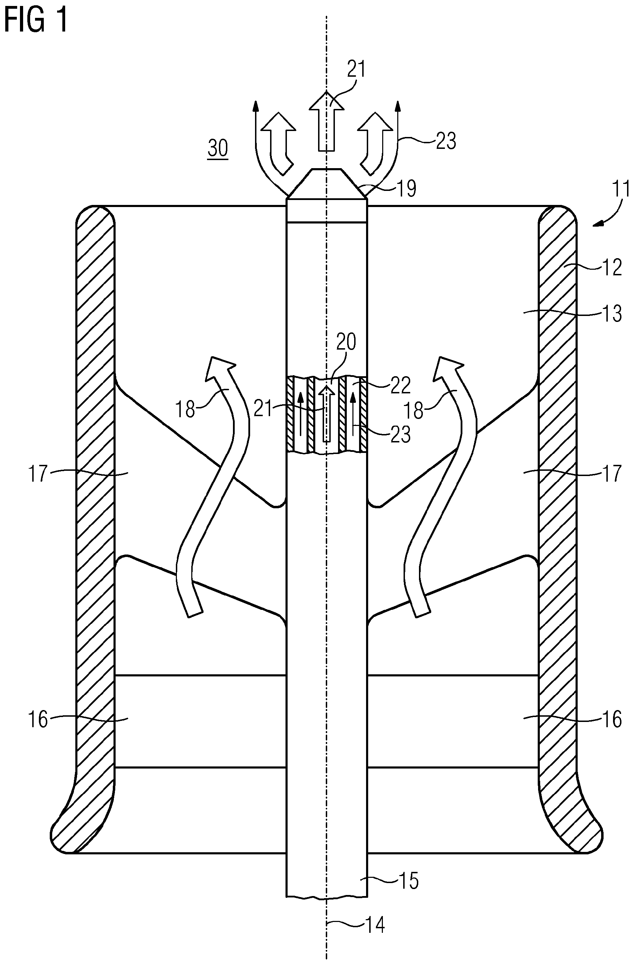

In Figur 1 ist ein Brenner 11 dargestellt, der einen Mantel 12 aufweist, in dem ein Hauptkanal 13 für Luft ausgebildet ist. Der Mantel 13 ist um eine Symmetrieachse 14 symmetrisch aufgebaut und weist im Zentrum des Hauptkanals 13 eine Brennerlanze 15 auf. Die Brennerlanze 15 ist mit Stegen 16 in dem Hauptkanal 13 fixiert. Außerdem erstrecken sich zwischen der Brennerlanze 15 und dem Mantel 12 Leitschaufeln 17, die der Luft einen Drall um die Symmetrieachse 14 aufprägen, wie den angedeuteten Luftpfeilen 18 zu entnehmen ist.

Die Brennerlanze 15 weist am stromabwärtigen Ende eine Brennerspitze 19 auf, wobei diese über einen zentralen Luftkanal 20 mit Luft 21 und über einen um den Luftkanal 20 herum angeordneten Ringkanal 22 mit einem Brennstoff 23 versorgt wird. Der Brennstoff 23 kann gasförmig oder flüssig sein. Die Luft 21 und der Brennstoff 23 wird über nicht näher dargestellte Öffnungen in der Brennerspitze ausgetrieben und so dem Luftstrom aus dem Hauptkanal 13 zugemischt. Dabei kühlt die Luft 21 die Brennerspitze 19 (hierzu im Folgenden noch mehr). Der Brenner 11 folgt dem Funktionsprinzip eines Pilotbrenners. Dieser kann beispielsweise in einen nicht näher dargestellten Brennraum einer Gasturbine eingebaut werden, wobei der Brennraum in diesem Fall eine Umgebung 30 der Brennerspitze bildet. In dem Luftkanal 21 kann noch eine Brennstofflanze (nicht dargestellt) zur Eindüsung eines anderen Brennstoffs angeordnet sein, durch die die Luft zum Austritt in die kegelförmige Außenfläche gedrängt wird.

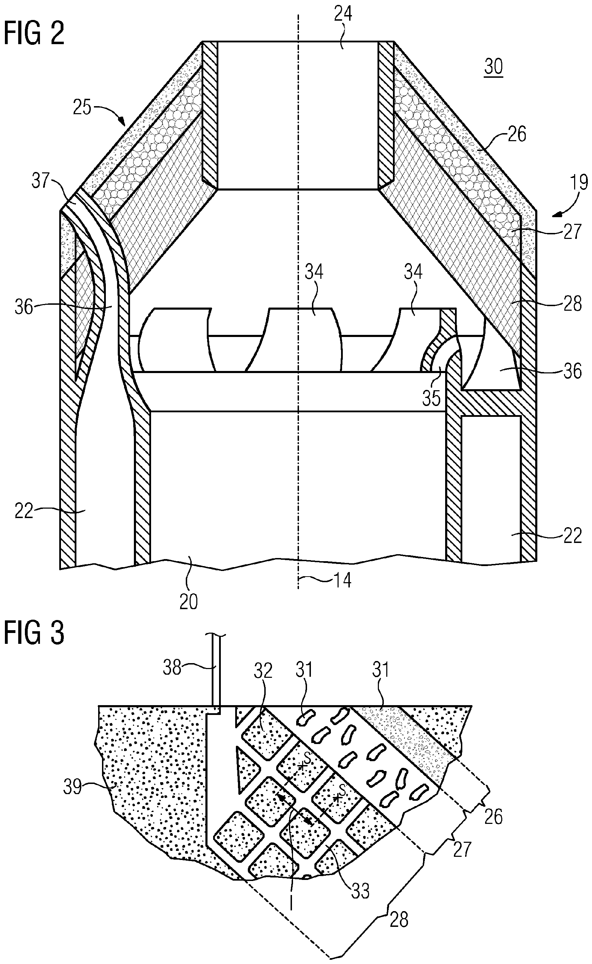

Gemäß Figur 2 ist die Brennerspitze 19 im Schnitt dargestellt, die gemäß Figur 1 in den Brenner 11 eingebaut werden kann. Zu erkennen ist der zentrale Luftkanal 20, der in eine zentrale Austrittsöffnung 24 mündet. In dieser kann die bereits angesprochene zusätzliche Brennstofflanze angeordnet sein (nicht dargestellt). Außerdem ist der Ringkanal 22 für den Brennstoff erkennbar.

Die Brennerspitze wird durch eine Wandstruktur 25 gebildet, welche aus einer an die Umgebung 30 der Brennerspitze 19 anschließende Lage 26, einer Zwischenlage 27, die man auch als mittlere Lage 27 bezeichnen kann, und einer den zentralen Luftkanal 20 zugewandten Lage 28 besteht. Jede dieser Lagen 26, 27, 28 weist eine andere Struktur auf, wobei in der Lage 26 und der Lage 27 Poren 31 (vgl. Figur 3) und in der Lage 28 Gitterzwischenräume 32 vorgesehen sind, die sich zwischen Gitterstreben 33 (vgl. Figur 3) befinden.

Durch die Poren 31 und die Gitterzwischenräume 32 ist die Wandstruktur 25 durchlässig für die Luft und bildet damit einen Teil des Luftkanalsystems. Die Luft, die durch den zentralen Luftkanal 22 geleitet wird, verlässt die Brennerspitze 19 teilweise durch die Austrittsöffnung 24 und teilweise über die Wandstruktur 25. In dem zentralen Luftkanal 20 sind Luftleitstrukturen 34 in Form von Leitschaufeln vorgesehen, die dazu beitragen, dass die Luft gleichmäßig über die Oberfläche der Wandstruktur verteilt wird. Hierzu tragen auch Innenkanäle 35 in den Luftleitstrukturen 34 bei, die Luft in den radial außenliegenden Randbereich der Wandstruktur 25 bringen.

Die den zentralen Luftkanal 20 zugewandte Lage 28 besteht aus einem dreidimensionalen Gitter. Dieses weist vorteilhaft nur einen geringen Strömungswiderstand gegenüber der Luft auf, verleiht der Wandstruktur 25 jedoch eine vergleichsweise hohe mechanische Stabilität. In der Zwischenlage 27 befinden sich große Poren. Auch diese setzen der Luft noch einen verhältnismäßig geringen Strömungswiderstand entgegen, sind aber geeignet, um die Luft fein über den gesamten Querschnitt der Wandstruktur, also den zur Verfügung stehenden Querschnitt für die Luftkanalstruktur, zu verteilen. Die der Umgebung 30 zugewandte Lage 26 weist kleinere Poren auf, als die Zwischenlage. Diese führen zu einer starken Oberflächenvergrößerung im Inneren der Lage 26, so dass die durchströmende Luft in diesem Bereich die aus der Umgebung 30 stammende Wärme aufnehmen und nach Verlassen der Brennerspitze 19 aus derselben austragen kann. Die Lage 26 ist im Vergleich zu den anderen Lagen mit einer geringeren Dicke ausgeführt, damit der durch diese hervorgerufene Strömungswiderstand nicht zu groß wird.

Der Ringkanal 22 mündet am Umfang in mehrere Brennstoffkanäle 36, welche über Brennstofföffnungen mit der Umgebung 30 kommunizieren. Dadurch wird der Brennstoff gleichmäßig am Umfang der Brennerspitze 19 verteilt in die Umgebung 30 eingeleitet, um thermische Belastungsspitzen an bestimmten Stellen der Brennerspitze zu vermeiden. Da eine ungerade Anzahl von Brennstoffkanälen 36 am Umfang angeordnet ist, ergibt sich eine geschnittene Darstellung nur auf einer Seite der Brennerspitze 19. Dasselbe gilt im Übrigen für die Luftleitstrukturen 34.

In Figur 3 ist dargestellt, wie die Brennerspitze 19 gemäß Figur 2 durch selektives Laserschmelzen mittels eines Laserstrahls 38 in einem Pulverbett 39 hergestellt werden kann. Zu erkennen ist ein Ausschnitt der Wandstruktur 25, bestehend aus der später der Umgebung 30 zugewandten Lage 26, der Zwischenlage 27 und der später dem Luftkanal 20 zugewandten Lage 28. Zu erkennen ist, dass die Poren 31 in der Lage 26 feiner sind als in der Zwischenlage 27. Dies kann beispielweise durch eine Modifikation der Verfahrensparameter des Laserschmelzens erreicht werden. Das Raumgitter in der Lage 28 ist in Figur 3 detailliert dargestellt. Es ergeben sich würfelförmige Gitterzellen, wobei der Lochabstand 1 sich aus dem Abstand der Schwerpunkte S der Querschittsflächen der Gitterzwischenräume, also dem Schnittpunkt der Diagonalen der betreffenden quadratischen Querschnittsflächen ergibt.

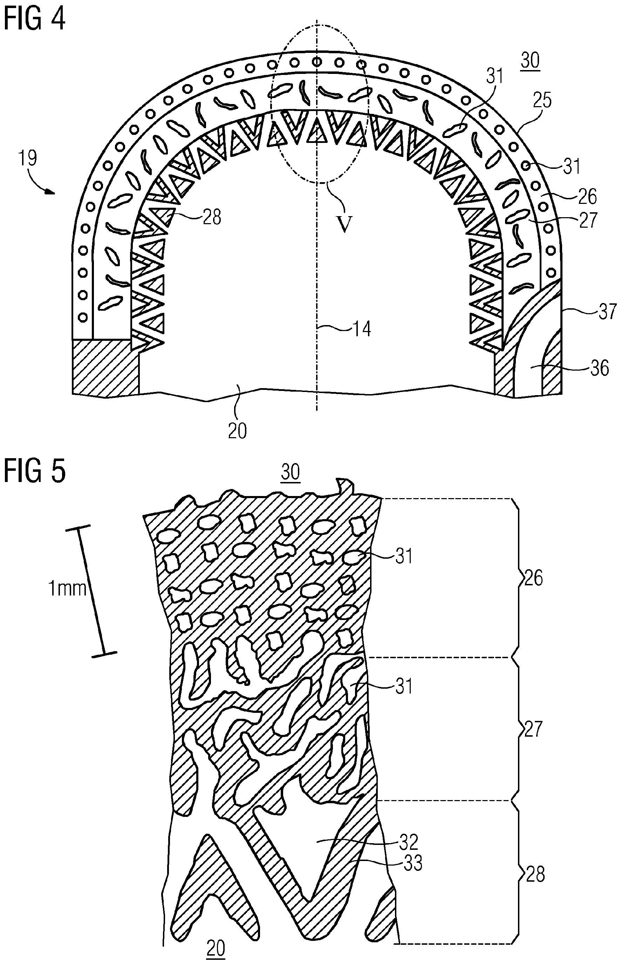

In Figur 4 ist ein anderes Ausführungsbeispiel der Brennerspitze dargestellt. Die Wandstruktur 25 weist hier eine kalottenartige Form auf, wobei auf eine zentrale Austrittsöffnung 24 verzichtet wurde. Die Luft durchtritt vollständig die durch die poröse Wandstruktur gebildete Luftkanalstruktur, wobei die Wandstruktur wieder in drei Lagen 26, 27, 28 ausgebildet ist. Auch der Brennstoffkanal 36 mündet in die Brennstofföffnung 37, wobei diese radial außen an der Brennerspitze 19 angeordnet ist.

Der Aufbau der Wandstruktur 25 als Detail X ist in Figur 5 maßstabsgerecht dargestellt. Ein Maßstab für die Länge von 1 mm ist in Figur 5 eingezeichnet. Jeder der drei Lagen ist ungefähr 1 mm stark. Die der Umgebung 30 zugewandte Lage 26 und die Zwischenlage (mittlere Lage) 27 weist Poren 31 auf, während die dem Luftkanal 20 zugewandte Lage 28 als Gitterstruktur mit Gitterstäben 33 und Gitterzwischenräumen 32 ausgebildet ist.

Die Luft passiert zunächst die Lage 28, wobei die Gitterstruktur strömungsgünstig ausgelegt ist. Durch die Gitterzwischenräume 32 gelangt die Luft in die groben Poren 31 der Zwischenlage 27, wo sie mit vergleichsweise geringem Druckverlust in die Poren 31 der Lage 26 verteilt wird. Von dort gelangt sie in nicht näher dargestellter Weise in die Umgebung 30.

Die Gitterstruktur in der Lage 28 ist geometrisch so ausgebildet, dass sie durch eine geeignete Belichtungsstrategie beispielsweise mittels Laserschmelzen hergestellt werden kann. Die Poren 31 in den Lagen 26 und 27 können dabei durch eine definierte Belichtungsstrategie erhalten werden. Dabei kann, wenn die Zwischenräume zwischen den Pulverpartikeln keine genügende Porosität hervorrufen, auch eine Belichtungsstrategie verwendet werden, bei der die Oberfläche des Pulverbetts 39 nur partiell belichtet wird, so dass einzelne Pulverpartikel unbelichtet bleiben und später aus dem Bauteil entfernt werden können. Die mittlere Lage 27 zeigt eine Porenbildung, die durch eine statistisch verteilte, unvollständige Belichtung des Pulverbetts entsteht, wobei der Verlauf der Poren bzw. der belichteten Region der jeweiligen Pulverlagen (diese entsprechen einem Belichtungsschritt und sind wesentlich dünner als die drei Lagen 26, 27, 28) zufällig ist. In der Lage 26 folgt das unvollständige Belichtungsregime bestimmten Mustern, beispielsweise einem Linienabstand bei der Belichtung, der bewusst so groß gewählt wird, dass zwischen den Spuren unbelichtete und nicht aufgeschmolzene oder angeschmolzene Partikel verbleiben. In diesen Bereichen entstehen die Poren 31, wobei die Struktur der Lage 26 mit einem Gewebe vergleichbar ist. Dies erreicht man beispielsweise, indem man die parallelen Spuren während der Herstellung in regelmäßigen Abständen um 90° verdreht. Je nach gewünschter Porengröße findet dieser Wechsel nach einer bestimmten Anzahl von Pulverlagen statt.

## Patentansprüche

1. Brennerspitze zum Einbau in einen Brenner (11), wobei die Brennerspitze ein zur Umgebung der Brennerspitze offenes Luftkanalsystem und ein zur Umgebung der Brennerspitze offenes Brennstoffkanalsystem aufweist, wobei ein Luftkanal (20), der Teil des Luftkanalsystems ist, zentral in der Brennerspitze verläuft und dieser zentrale Luftkanal von einer offen porösen und/oder als Raumgitter ausgeführten Wandstruktur (25) umgeben ist, wobei in der Wandstruktur (25) befindliche Poren (31) und/oder Gitterzwischenräume (32), die Teil des Luftkanalsystems sind, eine Verbindung zwischen dem Luftkanal (20) und der Umgebung der Brennerspitze bilden, **dadurch gekennzeichnet, dass** die Wandstruktur (25) aus mehreren Lagen (26, 27, 28) mit unterschiedlicher Porosität und/oder unterschiedlichem Gitteraufbau besteht, wobei die Lagen (26, 27, 28) von dem Luftkanalsystem nacheinander durchlaufen werden.

2. Brennerspitze nach Anspruch 1,
**daduch gekennzeichnet**,
dass drei Lagen (26, 27, 28) mit unterschiedlicher Porosität und/oder unterschiedlichem Gitteraufbau vorgesehen sind.

3. Brennerspitze nach Anspruch 2,
**dadurch gekennzeichnet,**
**dass** die mittlere Porengröße in benachbarten Lagen gesehen in der vorgesehenen Flussrichtung der Luft von Lage zu Lage abnimmt.

4. Brennerspitze nach einem der voranstehenden Ansprüche,
**dadurch gekennzeichnet,**
**dass** die Porengröße der Poren (31) in einer an die Umgebung der Brennerspitze grenzenden Lage (26) zwischen 10 µm und 250 µm, bevorzugt zwischen 30 µm und 170 µm beträgt.

5. Brennerspitze nach einem der voranstehenden Ansprüche,
**dadurch gekennzeichnet,**
**dass** die Porengröße der Poren (31) oder die Größe der Gitterzwischenräume (32) im Raumgitter in einer an den zentralen Luftkanal angrenzenden Lage (28) zwischen 1 mm und 9 mm, bevorzugt zwischen 2 mm und 6 mm, besonders bevorzugt zwischen 2,5 mm und 4,5 mm beträgt.

6. Brennerspitze nach Anspruch 4 und 5,
**dadurch gekennzeichnet,**
**dass** die Porengröße der Poren (31) in einer Zwischenlage (27) oder mehreren Zwischenlagen, die zwischen der an den zentralen Luftkanal angrenzenden Lage (28) und der an die Umgebung der Brennerspitze grenzenden Lage (26) liegt oder liegen, zwischen 150 µm und 1000 µm, bevorzugt zwischen 200 µm und 800 µm, besonders bevorzugt zwischen 250 µm und 750 µm beträgt.

7. Brennerspitze nach einem der voranstehenden Ansprüche,
**dadurch gekennzeichnet,**
**dass** im zentralen Luftkanal (20) Luftleitstrukturen (34) vorgesehen sind.

8. Brennerspitze nach Anspruch 7,
**dadurch gekennzeichnet,**
**dass** die Luftleitstrukturen (34) mit Innenkanälen (35) ausgestattet sind, die auf die Wandstruktur (25) gerichtet sind.

9. Brennerspitze nach einem der voranstehenden Ansprüche,
**dadurch gekennzeichnet,**
**dass** der zentrale Luftkanal (20) zu einer zentralen Austrittsöffnung (24) in der Brennerspitze führt.

10. Brennerspitze nach einem der voranstehenden Ansprüche,
**dadurch gekennzeichnet,**
**dass** die Wandstruktur (25) eine konische oder kalottenartige Form aufweist.

11. Brennerspitze nach einem der voranstehenden Ansprüche,
**dadurch gekennzeichnet,**
**dass** eine Vielzahl von Brennstoffkanälen (36), die Teil des Brennstoffkanalsystems sind, durch die Wandstruktur (25) führt, und die Brennstoffkanäle (36) zur Umgebung der Brennerspitze offen sind.

12. Brennerspitze nach Anspruch 11,
**dadurch gekennzeichnet,**
**dass** die Brennstoffkanäle (36) mit einem den zentralen Luftkanal (20) umgebenden Ringkanal (22), der Teil des Bennstoffkanalsystems ist, in Verbindung stehen.

13. Verfahren zum Herstellen einer nach einem der voranstehenden Ansprüche ausgeführten Brennerspitze,
**dadurch gekennzeichnet,**
**dass** zum Herstellen ein additives Herstellungsverfahren verwendet wird, bei dem die offen porös und/oder als Raumgitter ausgeführte Wandstruktur (25) mit der Brennerspitze in einem Stück hergestellt wird.

14. Verfahren nach Anspruch 13,
**dadurch gekennzeichnet,**
**dass** die Wandstruktur (25) aus mehreren Lagen (26, 27, 28) mit unterschiedlicher Porosität und/oder unterschiedlichem Gitteraufbau, die von dem Luftkanalsystem nacheinander durchlaufen werden, hergestellt wird.

15. Verfahren nach Anspruch 14,
**dadurch gekennzeichnet,**
**dass** die Brennerspitze in einem Pulverbett (39) hergestellt wird und die Porosität der Lagen unterschiedlicher Porosität durch eine Veränderung des Energieeintrags in das Pulverbett (39) und/oder durch Verwendung unterschiedlicher Pulver hergestellt wird.

16. Brenner mit einer Brennerlanze (15),
**dadurch gekennzeichnet,**
**dass** am Ende der Brennerlanze (15) eine Brennerspitze (19) nach einem der Ansprüche 1 bis 12 vorgesehen ist.

## Claims

1. Burner tip for incorporation in a burner (11), wherein the burner tip has an air duct system that is open to the surrounding area of the burner tip and a fuel duct system that is open to the surrounding area of the burner tip, wherein an air duct (20), which is part of the air duct system, runs centrally in the burner tip and this central air duct is surrounded by a wall structure (25) which is openly porous and/or configured as a space lattice, wherein pores (31) located in the wall structure (25) and/or lattice interspaces (32) which are part of the air duct system form a connection between the air duct (20) and the surrounding area of the burner tip,
**characterized in that**
the wall structure (25) consists of multiple layers (26, 27, 28) that have different porosities and/or different lattice structures, wherein the air duct system passes through the layers (26, 27, 28) in succession.

2. Burner tip according to Claim 1,
**characterized**
**in that** three layers (26, 27, 28) that have different porosities and/or different lattice structures are provided.

3. Burner tip according to Claim 2,
**characterized**
**in that** the mean pore size in adjacent layers decreases from layer to layer, as viewed in the intended air flow direction.

4. Burner tip according to one of the preceding claims,
**characterized**
**in that** the pore size of the pores (31) in a layer (26) bounding the surrounding area of the burner tip is between 10 µm and 250 µm, preferably between 30 µm and 170 µm.

5. Burner tip according to one of the preceding claims,
**characterized**
**in that** the pore size of the pores (31) or the size of the lattice interspaces (32) in the space lattice in a layer (28) adjoining the central air duct is between 1 mm and 9 mm, preferably between 2 mm and 6 mm, particularly preferably between 2.5 mm and 4.5 mm.

6. Burner tip according to Claims 4 and 5,
**characterized**
**in that** the pore size of the pores (31) in an intermediate layer (27) or multiple intermediate layers that lie(s) between the layer (28) adjoining the central air duct and the layer (26) bounding the surrounding area of the burner tip is between 150 µm and 1000 µm, preferably between 200 µm and 800 µm, particularly preferably between 250 µm and 750 µm.

7. Burner tip according to one of the preceding claims,
**characterized**
**in that** air guiding structures (34) are provided in the central air duct (20).

8. Burner tip according to Claim 7,
**characterized**
**in that** the air guiding structures (34) are equipped with inner ducts (35) which are directed at the wall structure (25) .

9. Burner tip according to one of the preceding claims,
**characterized**
**in that** the central air duct (20) leads to a central outlet opening (24) in the burner tip.

10. Burner tip according to one of the preceding claims,
**characterized**
**in that** the wall structure (25) has a conical or dome-like form.

11. Burner tip according to one of the preceding claims,
**characterized**
**in that** a multiplicity of fuel ducts (36), which are part of the fuel duct system, leads through the wall structure (25), and the fuel ducts (36) are open to the surrounding area of the burner tip.

12. Burner tip according to Claim 11,
**characterized**
**in that** the fuel ducts (36) are connected to an annular duct (22) that surrounds the central air duct (20) and is part of the fuel duct system.

13. Method for producing a burner tip configured according to one of the preceding claims,
**characterized**
**in that**, for production purposes, use is made of an additive production method in which the wall structure (25) which is openly porous and/or configured as a space lattice is produced in one piece with the burner tip.

14. Method according to Claim 13,
**characterized**
**in that** the wall structure (25) is produced from multiple layers (26, 27, 28) that have different porosities and/or different lattice structures, through which the air duct system passes in succession.

15. Method according to Claim 14,
**characterized**
**in that** the burner tip is produced in a powder bed (39) and the porosity of the layers that have different porosities is produced by changing the input of energy into the powder bed (39) and/or by using different powders.

16. Burner with a burner lance (15),
**characterized**
**in that** a burner tip (19) according to one of Claims 1 to 12 is provided at the end of the burner lance (15).

## Revendications

1. Pointe de brûleur à monter dans un brûleur (11), dans laquelle la pointe de brûleur a un système de conduit pour de l'air, ouvert vers l'environnement de la pointe du brûleur, et un système de conduit pour du combustible, ouvert vers l'environnement de la pointe du brûleur, dans laquelle un conduit (20) pour de l'air, qui fait partie du système de conduit pour de l'air, s'étend centralement dans la pointe du brûleur et ce conduit central pour de l'air est entouré d'une structure (25) de paroi à porosité ouverte et/ou réalisée sous la forme d'un réseau tridimensionnel, dans laquelle des pores (31) ou des espaces (32) intermédiaires de réseau se trouvant dans la structure (25) de paroi, qui font partie du système de conduit pour de l'air, forment une communication entre le conduit (20) pour de l'air et l'environnement de la pointe du brûleur,
**caractérisée**
**en ce que** la structure (25) de paroi est constituée de plusieurs couches (26, 27, 28) de porosités différentes et/ou de structures de réseaux différentes, les couches (26, 27, 28) étant traversées les unes après les autres par le système de conduit pour de l'air.

2. Pointe de brûleur suivant la revendication 1,
**caractérisée**
**en ce qu'**il est prévu trois couches (26, 27, 28) de porosité différente et/ou de structure de réseaux différente.

3. Pointe de brûleur suivant la revendication 2,
**caractérisée**
**en ce que** la dimension moyenne des pores de couches voisines diminue de couche en couche considérée dans la direction prévue de flux de l'air.

4. Pointe de brûleur suivant l'une des revendications précédentes,
**caractérisée**
**en ce que** les dimensions des pores (31) dans une couche (26) voisine de l'environnement de la pointe du brûleur est comprise entre 10 µm et 250 µm, de préférence entre 30 µm et 170 µM.

5. Pointe de brûleur suivant l'une des revendications précédentes,
**caractérisée**
**en ce que** la dimension des pores (31) ou la dimension des espaces (32) intermédiaires de réseau dans le réseau tridimensionnel dans une couche (28) voisine du conduit central pour de l'air est comprise entre 1 mm et 9 mm, de préférence entre 2 mm et 6 mm, d'une manière particulièrement préférée entre 2,5 mm et 4,5 mm.

6. Pointe de brûleur suivant la revendication 4 et 5,
**caractérisée**
**en ce que** la dimension des pores (31) dans une couche (27) intermédiaire ou dans plusieurs couches intermédiaires, qui se trouvent entre la couche (28) voisine du conduit central pour de l'air et la couche (26) voisine de l'environnement de la pointe du brûleur, est ou sont comprises entre 150 µm et 1 000 µm, de préférence entre 200 µm et 800 µm, d'une manière particulièrement préférée entre 250 µm et 750 µm.

7. Pointe de brûleur suivant l'une des revendications précédentes,
**caractérisée**
**en ce que** des structures (34) de conduite d'air sont prévues dans le conduit (20) central pour de l'air.

8. Pointe de brûleur suivant la revendication 7,
**caractérisée**
**en ce que** les structures (34) de conduite d'air sont conformées en ayant des conduits (35) intérieurs, qui sont dirigés sur la structure (25) de paroi.

9. Pointe de brûleur suivant l'une des revendications précédentes,
**caractérisée**
**en ce que** le conduit (20) central pour de l'air mène à une ouverture (24) centrale de sortie dans la pointe du brûleur.

10. Pointe de brûleur suivant l'une des revendications précédentes,
**caractérisée**
**en ce que** la structure (25) de paroi à une forme conique ou de type en calotte.

11. Pointe de brûleur suivant l'une des revendications précédentes,
**caractérisée**
**en ce qu'**une pluralité de conduits (36) pour du combustible, qui font partie du système de conduit pour du combustible, traversent la structure (25) de paroi et les conduits (36) pour du combustible sont ouverts vers l'environnement de la pointe du brûleur.

12. Pointe de brûleur suivant la revendication 11,
**caractérisée**
**en ce que** les conduits (26) pour du combustible communiquent avec un conduit (22) annulaire, qui entoure le conduit (20) central pour de l'air et qui fait partie du système de conduit pour du combustible.

13. Procédé de fabrication d'une pointe de brûleur réalisée suivant l'une des revendications précédentes,
**caractérisé**
**en ce que** l'on utilise pour la fabrication un procédé de fabrication additive, dans lequel on fabrique, en une pièce avec la pointe de brûleur, la structure (25) de paroi à porosité ouverte et/ou réalisée en réseau tridimensionnel.

14. Procédé suivant la revendication 13,
**caractérisé**
**en ce que** l'on fabrique la structure (25) de paroi en plusieurs couches (26, 27, 28) de porosité différente et/ou de structure de réseaux différente, qui sont traversées les unes après les autres par le système de conduit pour de l'air.

15. Procédé suivant la revendication 14,
**caractérisé**
**en ce que** l'on fabrique la pointe de brûleur dans un lit (39) de poudre et on produit la porosité des couches de porosité différente par une modification de l'apport d'énergie au lit (39) de poudre et/ou en utilisant des poudres différentes.

16. Brûleur ayant une torche (15),
**caractérisé**
**en ce qu'**il est prévu, à l'extrémité de la torche (15) du brûleur, une pointe (19) de brûleur suivant l'une des revendications 1 à 12.
